# EUROPÄISCHE PATENTANMELDUNG

(11) **EP 0 790 416 A1**
(43) Veröffentlichungstag der Anmeldung: **20.08.1997**
(21) Anmeldenummer: 97101850.2
(22) Anmeldetag: 06.02.1997
(51) Int. Cl.: F16B 37/02

(54) **Schraubenverbindung**

(30) Priorität: 13.02.1996 DE 19605128; 30.07.1996 DE 19630663
(71) Anmelder: Richard Bergner GmbH & Co, 91126 Schwabach (DE)
(72) Erfinder: Pfaff, Helmut, 91126 Rednitzhembach (DE)
(74) Vertreter: Tergau, Enno, Dipl.-Ing.

(57) **Zusammenfassung**

Eine Schraubverbindung enthält eine gewindeformende Schraube (1) und ein mit dem Schraubloch (7) versehenes dünnwandiges Blech (2). Sie dient zum Verschrauben des ebenfalls dünnwandigen Bauteils (3). Der das Schraubloch (7) enthaltende Teil des Bleches (2) ist als Napf (10) ausgemuldet. Die Napfwandung ist mit Sicken (12) ausgesteift.

## Beschreibung

Die Erfindung betrifft eine Schraubenverbindung mit einer gewindeformenden Schraube und mit einem das Schraubloch enthaltenden, dünnwandigen Blech. Derartige Schraubenverbindungen sind kostengünstig ohne ein vorgefertigtes Mutterteil, z.B. ohne Niet- oder Stanzmutter, Schweißmutter od.dgl. herzustellen. Das Blech, in welches die Schraube eingedreht wird, ist entweder mit einem Bohr- oder Stanzloch als Kernloch versehen und die in Achsrichtung wirksame Länge des Lochmantels kann dabei zur besseren Haltbarkeit der Gewindeverbindung durch einen z.B. im Wege des Kragenziehens angeformten Blechdurchzug vergrößert sein. Eine solche Lösung eignet sich auch für Schraubverbindungen in mit Auflagen empfindlicher Werkstoffe wie Emaille beschichteten Blechen (US-A-3910004)

Weiterhin ist es bei derartigen Direktverschraubungen bekannt, das Schraubloch am Boden einer napfförmigen Vertiefung (US-A-2169057) gegebenenfalls zusätzlich mit anschließendem Durchzug anzuordnen. Die napfförmige Vertiefung erhöht die Haltbarkeit des Muttergewindeteils, also die Ausreißkraft der Schraube. Es verhindert nämlich bei einem gefurchten Muttergewinde, daß dieses beim Verspannen eines Bauteils geringer Wandstärke in den Auslauf des Schraubengewindes unterhalb des Schraubenkopfes hineinläuft. Letzteres würde nämlich eine Schwächung der Haltbarkeit des Muttergewindes bzw. der Ausreißkraft der Schraube bedeuten.

Besonders in der Automobilindustrie besteht der Trend zur Gewichtsreduzierung. Deswegen werden zunehmend Karosseriebleche geringer Wandstärke von etwa 0,7 bis 0,8 mm eingesetzt. Es bereitet Probleme, wenn bei einer Direktverschraubung sowohl das als Muttergewindeteil eingesetzte Blech als auch das zu verspannende Bauteil eine nur geringe Wandstärke aufweisen. Bei der erläuterten Napfung des Muttergewindebleches erhöht sich nämlich die Gefahr, daß die Eigenfestigkeit des Napfes geschwächt und daß dadurch das gefurchte Muttergewinde in den Auslauf des Schraubengewindes unterhalb des Schraubenkopfes hineingezogen wird.

Die Praxis zeigt, daß ein in dünne Bleche geformter, das Muttergewinde umgebender Napf nicht immer in der Lage ist, die volle Schraubenkraft aufzunehmen. Der Napf verformt sich bei Belastung in Richtung des Schraubenkopfes wieder zurück. Auf diese Weise kann das Muttergewinde in den Auslauf des Schraubengewindes an der Unterseite des Schraubenkopfes gelangen. Dies ist insbesondere dann zu erwarten, wenn das Durchgangsloch des zu verspannenden Bauteils zum Ausgleich großer Fügetoleranzen der Bauteile gegenüber dem Schraubendurchmesser vergleichsweise groß ist. Dann kann nämlich das Muttergewinde durch das Durchgangsloch hindurch direkt an der Unterseite des Schraubenkopfes zur Anlage kommen.

Der Erfindung liegt die Aufgabe zugrunde, eine Schraubenverbindung mit genapftem Muttergewindeteil so auszubilden, daß die Ausreißkraft der Schraube auch beim Verschrauben dünner Bleche und/oder dünnwandiger Bauteile mit gegenüber dem Schraubendurchmesser großem Durchgangsloch nicht beeinträchtigt wird. Sie wird durch Anspruch 1 gelöst.

Die Erfindung bewirkt eine Erhöhung der Formstabilität des Napfes. Diese Erhöhung erfordert keinen zusätzlichen Material- oder Fertigungsaufwand. Das Einbringen der Versteifungssicken erfolgt mit der Napfung, d.h. mit dem die Napfung vollziehenden Tiefziehvorgang. Dieser Tiefziehvorgang kann in einem Arbeitsgang mit der Lochung und dem damit zweckmäßigerweise verbundenen Kragenziehen zur Verlängerung der Axiallänge des Kernlochmantels vorgenommen werden. Die Sicken sind rinnenartig in von der Schraubenkopfseite weggewandter Richtung in das mit dem Muttergewinde versehene Blech eingeprägte Vertiefungen. Sie sind gleichmäßig über dem Lochumfang angeordnet. Schraublochseitig enden sie mit geringem Radialabstand zum Gewindeaußendurchmesser. Sie reichen zweckmäßig mindestens bis etwa zur schraubenkopfseitigen Blechoberfläche. Besonders zum Verspannen von Bauteilen mit zum Ausgleich großer Fügetoleranzen im Verhältnis zum Gewindeaußendurchmesser vergleichsweise großem Durchgangsloch ist es vorteilhaft, wenn die Sicken über den Napfbereich hinaus in die schrau-benkopfseitige Blechoberfläche hineinreichen.

Der Gegenstand der Erfindung wird anhand der Figuren beispielsweise erläutert. Es zeigen
- Fig. 1: die Einzelteile vor dem Fügen der Schraubverbindung in gegenseitiger Zuordnung nach Art einer Explosionsdarstellung,
- Fig. 2: die Schraubverbindung in gefügtem Zustand,
- Fig. 3: eine Draufsicht in Blickrichtung III von Fig.1 auf das das Muttergewinde enthaltende Dünnblech als Muttergewindeteil,
- Fig. 4: einen Querschnitt entsprechend der Linie IV-IV in Fig. 3,
- Fig. 5: eine Draufsicht auf eine modifizierte Ausführungsform des Muttergewindeteils analog Fig. 3,
- Fig. 6: einen Querschnitt entsprechend der Linie VI-VI in Fig. 5.

Die Schraubverbindung besteht aus der gewindeformenden Schraube 1, dem aus einem Dünnblech bestehenden Muttergewindeteil 2 und dem zwischen Schraube 1 und Muttergewindeteil 2 zu verspannenden, ebenfalls durch ein Dünnblech gebildeten Bauteil 3 mit dem Durchgangsloch 4, dessen Durchmesser zum Ausgleich großer Fügetoleranzen gegenüber dem Gewindeaußendurchmesser der Schraube 1 vergleichsweise überdimensioniert sein kann.

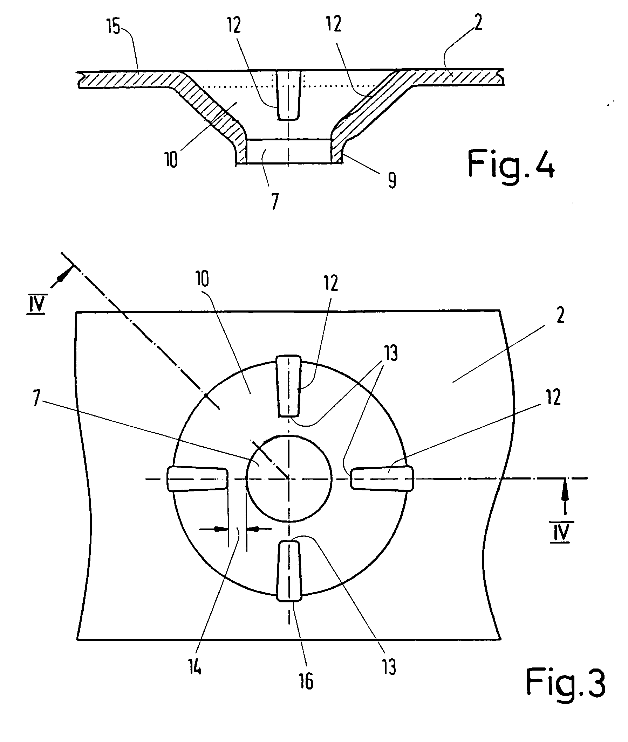

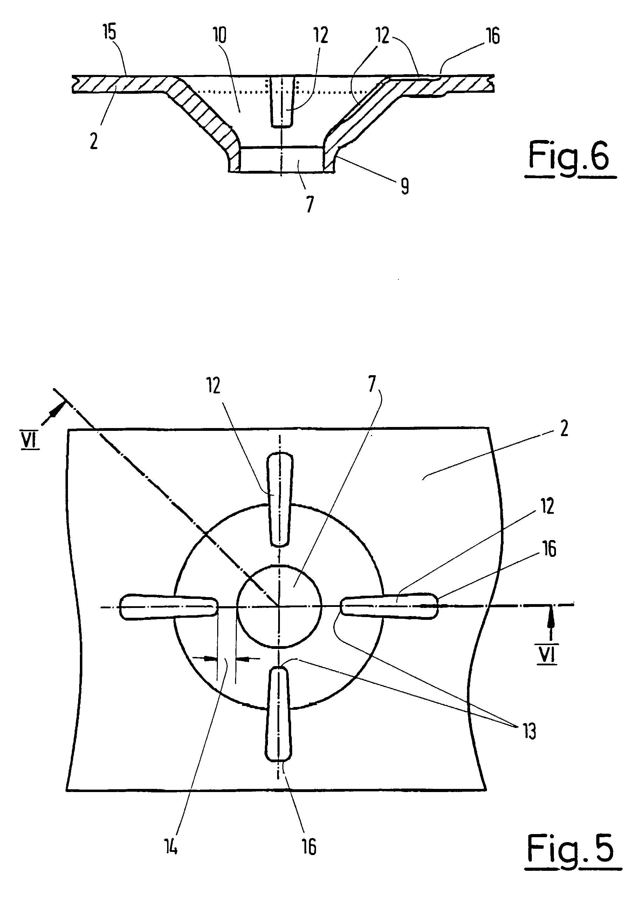

Die Schraube 1 ist eine gewindeformende Schraube mit dem Schraubenkopf 5. Sie wird mit ihrem Schraubengewinde 6 in das Kernloch 7 des Muttergewindeteils 2 eingeschraubt und formt sich dabei das Muttergewinde selbst. Zur Vergrößerung seiner in Richtung der Lochachse 8 wirksamen Mantellänge ist das Kernloch 7 z.B. im Wege des Kragenziehens mit einem Randkragen 9 versehen, der in vom Schraubenkopf 5 weggewandter Richtung an das Kernloch 7 angeformt ist. Das Kernloch 7 befindet sich am Boden bzw. Grund eines in das Muttergewindeteil 2 eingeformten Napfes 10. Der Napf 10 weist die Querschnittsform etwa eines Trichters oder einer Kugelkappe (Kalotte) auf und steht in vom Schraubenkopf 5 weggewandter Richtung über die Blechebene 11 des Muttergewindeteils 2 hinaus. Der Umfangsmantel des Napfes 10, also die Napfwandung, ist mit Versteifungssicken 12 versehen. Die Versteifungssicken 12 sind rinnenartig von der Seite des Schraubenkopfes 5 her eingeprägte Vertiefungen. Die Sicken 12 verlaufen mit ihrer Längsrichung im wesentlichen radial zur Lochachse 8 (Fig.3,5). Sie sind gleichmäßig über den Lochumfang verteilt angeordnet und umgeben damit die Lochachse 8 gewissermaßen strahlenförmig nach außen verlaufend (Fig.3,5).

Das innere Ende 13 der Versteifungssicken 12 hält einen geringen Radialabstand 14 vom Kernloch 7 bzw. vom Schraubloch. Die Sicken 12 reichen bis zur schraubkopfseitigen Blechoberfläche 15, münden also in die Blechoberfläche 15 aus.

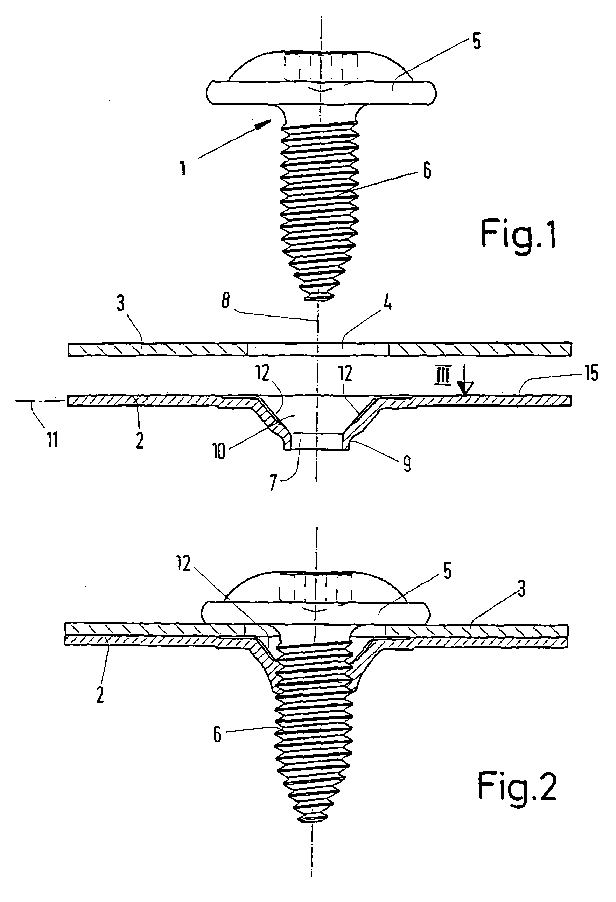

Bei der Ausführungsform nach Fig. 6 reichen die Sicken 12 über den Napf 10 hinaus in etwa radialer Richtung in die schraubenkopfseitige Blechoberfläche 15 hinein. Ihre radial äußeren Enden 16 liegen jedoch innerhalb des Beaufschlagungsbereiches durch den Schraubenkopf 5 (Fig.2).

Die Sicken 12 bilden eine Formaussteifung des Napfes 10, der dadurch auch bei Einbringung in ein vergleichsweise dünnwandiges Muttergewindeteil 2 die notwendige Ausreißkraft der Schraube 1 aufrechterhält.

### Bezugszeichenliste

- 1: Schraube
- 2: Muttergewinde
- 3: Bauteil
- 4: Durchgangsloch
- 5: Schraubenkopf
- 6: Schraubengewinde
- 7: Kernloch
- 8: Lochachse
- 9: Randkragen
- 10: Napf
- 11: Blechebene
- 12: Versteifungssicke
- 13: Innenende
- 14: Radialabstand
- 15: Blechoberfläche
- 16: Ende

## Patentansprüche

1. Schraubverbindung mit einer gewindeformenden Schraube (1) und mit einem das Schraubloch (7) enthaltenden dünnwandigen Blech (2), wobei der das Schraubloch (7) enthaltende Teil des Bleches (2) napfähnlich in Einschraubrichtung ausgemuldet und das Schraubloch (7) im Bereich des Napfgrundes angeordnet ist,
dadurch gekennzeichnet,
daß die Napfwandung mit Versteifungssicken (12) versehen ist.

2. Schraubverbindung nach Anspruch 1,
dadurch gekennzeichnet,
daß die Mantellänge des Schraubloches (7) durch einen in Einschraubrichtung hochgestellten, den Lochrand bildenden Randkragen (9) verlängert ist.

3. Schraubverbindung nach Anspruch 1 oder 2,
dadurch gekennzeichnet,
daß die Längsrichtung der Sicken (12) im wesentlichen radial zur Lochachse (8) verläuft.

4. Schraubverbindung nach einem oder mehreren der vorhergehenden Ansprüche,
dadurch gekennzeichnet,
daß die rinnenartigen Sicken (12) von der Seite des Schraubkopfes (5) her eingeprägt sind.

5. Schraubverbindung nach einem der Ansprüche 1 bis 4,
dadurch gekennzeichnet,
daß die Sicken (12) gleichmäßig über den Lochumfang verteilt angeordnet sind.

6. Schraubverbindung nach einem oder mehreren der vorhergehenden Ansprüche
dadurch gekennzeichnet,
daß die Sicken (12) mit geringem radialem Abstand (14) vom Umfang des Schraubloches angeordnet sind.

7. Schraubverbindung nach einem oder mehreren der vorhergehenden Ansprüche,
dadurch gekennzeichnet,
daß die Sicken (12) bis zur schraubenkopfseitigen Blechoberfläche (15) reichen.

8. Schraubverbindung nach einem der Ansprüche 1 bis 6.
dadurch gekennzeichnet,
daß die Sicken (12) über den Napfbereich hinaus in etwa radialer Richtung in die schraubenkopfseitige Blechoberfläche (15) hineinreichen.

9. Schraubverbindung nach Anspruch 8,
dadurch gekennzeichnet,
daß die radial äußeren Enden (16) der Sicken (12) innerhalb des Beaufschlagungsbereiches des Schraubenkopfes (5) liegen.
